# EUROPÄISCHE PATENTSCHRIFT

(11) **EP 2 467 279 B1**
(45) Veröffentlichungstag und Bekanntmachung des Hinweises auf die Patenterteilung: **12.11.2014**
(21) Anmeldenummer: 10732292.7
(22) Anmeldetag: 03.07.2010
(51) Int. Cl.: B60N 2/225, F16C 35/02

(54) **BESCHLAG FÜR EINEN FAHRZEUGSITZ**
FITTING FOR A VEHICLE SEAT
FERRURE POUR SIÈGE DE VÉHICULE

(30) Priorität: 19.08.2009 DE 102009038562
(43) Veröffentlichungstag der Anmeldung: 27.06.2012
(73) Patentinhaber: Johnson Controls Components GmbH & Co. KG, 67657 Kaiserslautern (DE)
(72) Erfinder: STILLEKE, Martin, 45657 Recklinghausen (DE)
(74) Vertreter: Loock, Jan Pieter
(86) Internationale Anmeldenummer: PCT/EP2010/004026
(87) Internationale Veröffentlichungsnummer: WO 2011/020523

(56) Entgegenhaltungen:
- EP-A1- 0 145 819
- DE-A1- 4 436 101

## Beschreibung

Die Erfindung betrifft einen Beschlag für einen Fahrzeugsitz mit den Merkmalen des Oberbegriffs des Anspruches 1.

Ein Beschlag dieser Art ist beispielsweise aus der DE 44 36 101 A1 bekannt. Als Lager für den Exzenter ist ein Ring vorgesehen, welcher von einem kleinen Kragen des zweiten Beschlagteils aufgenommen wird. Das Ziehen eines solchen Kragens wird mit zunehmender Härte des Materials schwieriger.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, dass der Rand der Aufnahme entlang seines Umfangs mittels einzelner axialer Vorsprünge partiell verbreitert ist, wird ein Stützlager geschaffen, welches eine ausreichende axiale Abmessung aufweist, um den Exzenter oder das Lager des Exzenters aufzunehmen und abzustützen. Die Vorsprünge sind aus dem Material des Beschlagteils ausgebildet. Die Ausbildung der Vorsprünge, vorzugsweise als Durchsetzungen, ist auch bei hochfesten Materialien möglich. Eine - bezüglich der beiden Stirnseiten des Beschlagteils - wechselseitige Ausbildung der Vorsprünge optimiert die axiale Abmessung des partiell verbreiterten Randes. Vorliegend ersetzt die Erfindung einen Kragenzug in einem Getriebebeschlag, jedoch kann die Erfindung prinzipiell auch an andere, einen Kragen aufweisende Stellen des Fahrzeugsitzes übertragen werden.

Die Verwendung eines Exzenterumlaufgetriebes in einem Beschlag erlaubt eine stufenlose Neigungseinstellung der Lehne eines Fahrzeugsitzes. Die Einsparung eines zentralen Ritzels gegenüber einem Planetenumlaufgetriebe führt zur Entstehung einer Taumelbewegung, die der relativen Drehung der Beschlagteile überlagert ist. Der Exzenter, der beispielsweise aus zwei mittels einer Feder auseinander gespannten Keilsegmenten oder aus einem sichelförmigen Element besteht, ist vorzugsweise auf seiner dem besagten Lager des einen Beschlagteils gegenüberliegenden Seite, beispielsweise der Innenseite, an einem Kragen des anderen Beschlagteils gelagert.

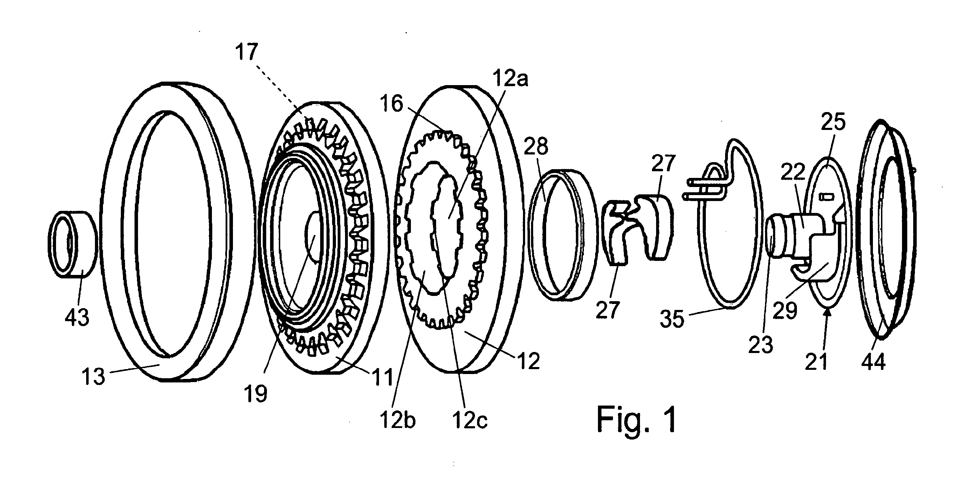

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels,

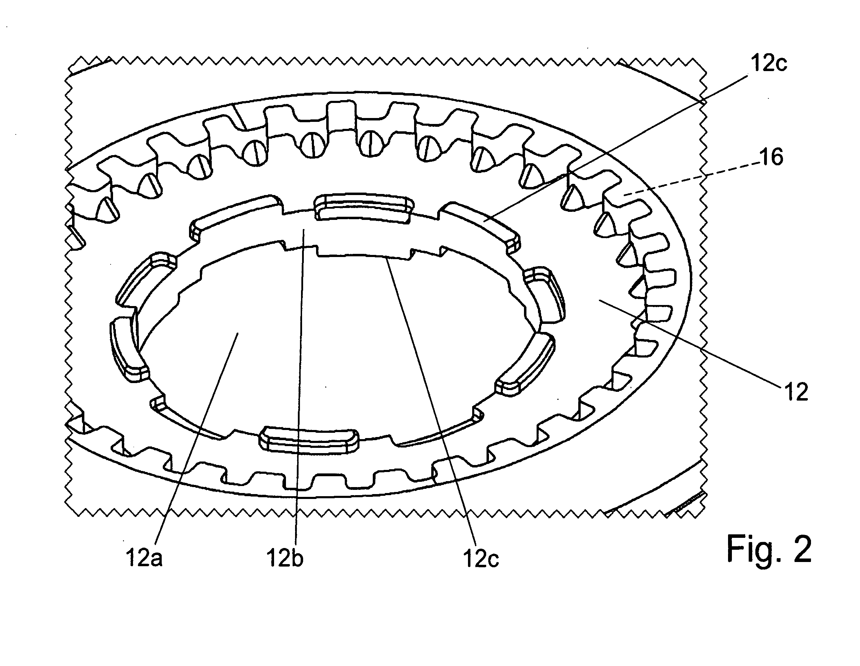

- Fig. 2: eine Detailansicht des zweiten Beschlagteils, und

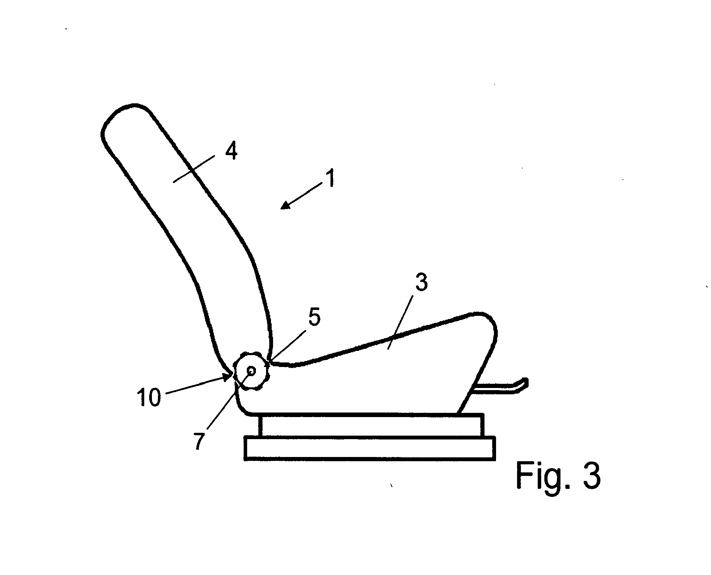

- Fig. 3: eine schematische Darstellung eines Fahrzeugsitzes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 auf eine später beschriebene Weise drehfest in einen Beschlag 10 ein. Die Antriebswelle 7 definiert die verwendeten Richtungsangaben eines Zylinderkoordinatensystems.

Der Beschlag 10 ist als Getriebebeschlag ausgebildet, bei welchem ein erstes Beschlagteil 11 und ein zweites Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist, deren diesbezüglicher Offenbarungsgehalt ausdrücklich einbezogen wird.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Diese Zuordnungen der Beschlagteile 11 und 12 sind bevorzugt, wenn die Antriebswelle 7 und die Lehne 4 die gleiche Drehrichtung haben sollen, oder wenn die Lage der Antriebswelle 7 bezüglich der Lehne 4 konstant sein soll, um beispielsweise einen die Antriebswelle 7 drehenden Elektromotor an der Struktur der Lehne 4 anbringen zu können. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Letztere Zuordnungen der Beschlagteile 11 und 12 sind bevorzugt, wenn die radialen Abstände der Befestigungspunkte zwischen dem Beschlag 10 und einem relativ dünnen Lehnenblech möglichst groß sein sollen.

Die beiden Beschlagteile 11 und 12 lassen sich jeweils näherungsweise in eine kreisrunde Scheibenform einbeschreiben. Die beiden Beschlagteile 11 und 12 bestehen vorzugsweise aus Metall, insbesondere Stahl. Zur Aufnahme der axial wirkenden Kräfte, also zum Zusammenhalt der Beschlagteile 11 und 12 ist ein Umklammerungsring 13 vorgesehen. Ein solcher Zusammenhalt mittels eines Umklammerungsrings ist beispielsweise in der US 6,799,806 A beschrieben, deren diesbezüglicher Offenbarungsgehalt ausdrücklich einbezogen wird. Der vorzugsweise metallische Umklammerungsring 13 ist mit der Montage des Beschlags 10 fest mit dem zweiten Beschlagteil 12 verbunden, vorzugsweise zunächst aufgepresst und dann verschweißt. Alternativ ist der Umklammerungsring 13 umgebördelt, wobei er das zweite Beschlagteil 12 übergreift. An einer seiner Stirnseiten weist der Umklammerungsring 13 einen radial nach innen gebogenen Rand auf, mittels welchem er, gegebenenfalls unter Zwischenlage eines Gleitrings, das erste Beschlagteil 11 radial außen übergreift, ohne die Relativbewegung der beiden Beschlagteile 11 und 12 zu behindern. In baulicher Hinsicht bilden die beiden Beschlagteile 11 und 12 daher zusammen eine scheibenförmige Einheit.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe (des Zahnkranzes 17) kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16.

Das erste Beschlagteil 11 weist auf der dem Zahnrad 16 zugewandten Seite konzentrisch zum Zahnkranz 17 einen Kragen 19 auf, der als Kragenzug am ersten Beschlagteil 11 angeformt (d.h. einstückig ausgebildet) oder daran als separate Hülse befestigt sein kann. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe auf.

Auf dem Kragen 19 sind zwei Keilsegmente 27 (mit ihren gekrümmten Innenflächen) abgestützt, die (mit ihren gekrümmten Außenflächen) das zweite Beschlagteil 12 mittels einer Gleitlagerbuchse 28 lagern, welche in das zweite Beschlagteil 12 drehfest eingepresst ist. Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die einander zugekehrten Breitseiten der Keilsegmente 27 nehmen mit je einer durch vorspringende Materialpartien definierten Ausnehmung jeweils einen abgewinkelten Endfinger einer Omega-Feder 35 auf, welche die Keilsegmente 27 in Umfangsrichtung auseinanderdrückt, wobei im Betrieb die vorspringenden Materialpartien der Keilsegmente 27 einander berühren und beaufschlagen können.

Der Mitnehmer 21 wird auf der Außenseite des ersten Beschlagteils 11 durch einen aufgeclipsten Sicherungsring 43 axial gesichert. Auf der Außenseite des zweiten Beschlagteils 12 ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Omega-Feder 35) wird ein Exzenter definiert, welcher in Verlängerung der Richtung der Exzentrizität das Zahnrad 16 an einer so definierten Eingriffsstelle in den Zahnkranz 17 drückt. Bei einem Antrieb durch die sich drehende Antriebswelle 7 wird ein Drehmoment zunächst auf den Mitnehmer 21 und mittels des Mitnehmersegments 29 dann auf den Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

In Abhängigkeit der Montage des Beschlags 10 wird der Exzenter (d.h. die Keilsegmente 27) vom zweiten Beschlagteil 12 gelagert, während er seinerseits das erste Beschlagteil 11 lagert, oder die Verhältnisse sind genau umgekehrt, d.h. der Exzenter ist am ersten Beschlagteil 11 abgestützt und stützt das zweite Beschlagteil 12.

Im zweiten Beschlagteil 12 ist (vorliegend konzentrisch zum Zahnrad 16) eine Aufnahme 12a ausgebildet, deren Rand 12b durch das Material des zweiten Beschlagteils 12 definiert wird. Die Gleitlagerbuchse 28 wird von dieser Aufnahme 12a aufgenommen und liegt an deren Rand 12b (am Material des zweiten Beschlagteils 12) an. Dabei weist die Gleitlagerbuchse 28 eine größere axiale Abmessung (d.h. entlang der Drehachse des Exzenters) auf als die Materialstärke des zweiten Beschlagteils 12 beträgt. Um der Aufnahme 12a die gleiche axiale Abmessung wie diejenige der Gleitlagerbuchse 28 zu geben, ist bei bekannten Beschlägen ein kleiner Kragen gezogen, welcher den Rand 12b der Aufnahme 12a bildet und in welchen dann die Gleitlagerbuchse 28 eingepresst ist.

Erfindungsgemäß ist der Rand 12b der Aufnahme 12a in Umfangsrichtung partiell verbreitert, indem aus dem (den Rand 12b definierenden) Material des zweiten Beschlagteils 12 durch axiale Durchsetzungen einzelne Vorsprünge 12c ausgebildet sind, d.h. das Material des zweiten Beschlagteils 12 wird entlang des Randes 12b der Aufnahme 12a stellenweise (mit konstantem Abstand in Umfangsrichtung) durchgedrückt und bildet dadurch die Vorsprünge 12c. Dies kann beispielsweise um bis zu drei Vierteln, vorzugsweise ein Viertel bis die Hälfte, der Materialstärke des zweiten Beschlagteils 12 erfolgen, wobei entlang des Umfangs des Randes 12b insgesamt beispielsweise die Hälfte bis drei Viertel des Randes 12b umgeformt sind. Zu jedem Vorsprung 12c gehört eine Vertiefung auf der anderen Stirnseite des Beschlagteils 12 von gleicher axialer Abmessung. Mit axial wechselseitig vorgesehenen (und ansonsten gleichen) Vorsprüngen 12c, also mit Vorsprüngen 12c entlang des Umfangs des Randes 12b abwechselnd auf den beiden Stirnseiten des Beschlagteils 12, wird so eine Lagerabstützung für die Gleitlagerbuchse 28 geschaffen, deren axiale Abmessung beispielsweise die doppelte Materialstärke des zweiten Beschlagteils 12 beträgt (normale Materialstärke plus zweimal die axiale Abmessung der Vorsprünge 12c). Mit der erfindungsgemäßen Lösung können insbesondere hochfeste Materialien verwendet werden, bei denen kein Kragenzug mehr ausgebildet werden kann.

Die Anzahl der Vorsprünge 12c entlang des Randes 12b der Aufnahme 12a und ihre jeweiligen Abmessungen in Umfangsrichtung und in axialer Richtung sowie ihre Durchsetzung einseitig oder beidseitig mit abwechselnder Richtung oder in anderem Rhythmus hängt von den speziellen Anforderungen an die zu schaffende Lagerabstützung ab. Grundsätzlich sind alle Varianten möglich, wobei die in der Zeichnung dargestellte Ausführung bevorzugt ist. Anstelle des durch die Gleitlagerbuchse 28 definierten Gleitlagers kann auch ein Wälzlager vorgesehen sein, das in entsprechender Weise eine Lagerabstützung am Rand 12b der Aufnahme 12a erhält.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 12: zweites Beschlagteil
- 12a: Aufnahme
- 12b: Rand
- 12c: Vorsprung
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Omega-Feder
- 43: Sicherungsring
- 44: Dichtring

## Patentansprüche

1. Beschlag für einen Fahrzeugsitz (1), insbesondere für einen Kraftfahrzeugsitz, mit einem ersten Beschlagteil (11), an welchem ein Zahnkranz (17) ausgebildet ist, einem zweiten Beschlagteil (12), an welchem ein Zahnrad (16) ausgebildet ist, welches mit dem Zahnkranz (17) kämmt, wodurch die beiden Beschlagteile (11, 12) miteinander in Getriebeverbindung stehen, einem drehbar gelagerten, von einem Mitnehmer (21) angetriebenen, umlaufenden Exzenter zum Antrieb einer relativen Abwälzbewegung des Zahnkranzes (17) an dem Zahnrad (16), und einem Lager für den Exzenter, welches in eine Aufnahme (12a) des ersten (11) oder zweiten Beschlagteils (12) eingepresst ist, **dadurch gekennzeichnet, dass** der Rand (12b) der Aufnahme (12a) entlang seines Umfangs mittels einzelner axialer Vorsprünge (12c) partiell verbreitert ist.

2. Beschlag nach Anspruch 1, **dadurch gekennzeichnet, dass** die Vorsprünge (12c) als Durchsetzungen im Material des Beschlagteils (11, 12) ausgebildet sind.

3. Beschlag nach Anspruch 2, **dadurch gekennzeichnet, dass** jedem der Vorsprünge (12c) eine Vertiefung auf der gegenüberliegenden Stirnseite des Beschlagteils (11, 12) zugeordnet ist.

4. Beschlag nach einem der Ansprüche 1 bis 3, **dadurch gekennzeichnet, dass** die Vorsprünge (12c) entlang des Umfangs des Randes (12b) der Aufnahme (12a) abwechselnd auf den beiden Stirnseiten des Beschlagteils (11, 12) vorgesehen sind.

5. Beschlag nach einem der Ansprüche 1 bis 4, **dadurch gekennzeichnet, dass** das Lager als ein Gleitlager oder ein Wälzlager ausgebildet ist.

6. Beschlag nach einem der Ansprüche 1 bis 4, **dadurch gekennzeichnet, dass** das Lager als ein Stützlager für eine Gleitlagerbuchse (28) ausgebildet ist.

7. Beschlag nach einem der Ansprüche 1 bis 6, **dadurch gekennzeichnet, dass** die axiale Abmessung der Vorsprünge (12c) bis zu drei Viertel der Materialstärke des Beschlagteils (11, 12) beträgt, insbesondere zwischen einem Viertel und der Hälfte.

8. Beschlag nach einem der Ansprüche 1 bis 7, **dadurch gekennzeichnet, dass** entlang des Umfangs des Randes (12b) der Aufnahme (12a) die Hälfte bis drei Viertel des Randes (12b) mit den Vorsprüngen (12c) versehen ist.

9. Beschlag nach einem der Ansprüche 1 bis 8, **dadurch gekennzeichnet, dass** das die Aufnahme (12a) aufweisende Beschlagteil (11, 12) aus einem hochfesten Material besteht.

10. Fahrzeugsitz, insbesondere Kraftfahrzeugsitz, mit einem Sitzteil (3) und einer Lehne (4), deren Neigung mittels wenigstens eines Beschlags (10) nach einem der Ansprüche 1 bis 9 einstellbar ist.

## Claims

1. Fasting for a vehicle seat (1), in particular for a motorised vehicle seat with a first fastening component (11) on which a sprocket (17) is installed, a second fastening component (12) on which a cog (16) is installed which interlocks with the sprocket (17), whereby the two fastening components (11 and 12) are in an operating connection with each other, a rotatable cam driven by a tappet (21) to drive a relative shift movement of the cog (16) and sprocket (17) and a bearing for the cam, which is pressed into a slot (12a) of the first (11) or second fastening component (12), **characterised in that** the rim (12b) of the slot (12a) is partially extended along its scope by individual axial protrusions (12c).

2. Fastening according to claim 1, **characterised in that** the protrusions (12c) are designed as projections in the material of the fasting component (11 and 12).

3. Fastening according to claim 2, **characterised in that** an indentation on the contrary face of the fastening component (11 and 12) is allocated to each of the protrusions (12c).

4. Fastening according to one of claims 1-3, **characterised in that** the protrusions (12c) along the extent of the cog rim (12b) of the slot (12a) are alternating on the two faces of the fastening component (11 and 12).

5. Fastening according to one of claims 1-4, **characterised in that** the bearing is designed as a sliding bearing or a shifting bearing.

6. Fastening according to one of claims 1-4, **characterised in that** the bearing is designed as a sliding bearing socket (28).

7. Fastening according to one of claims 1-6, **characterised in that** the axial dimension of the protrusions (12c) amounts up to three quarters of the material strength of the fastening component (11 and 12), in particular between a quarter and half.

8. Fastening according to one of claims 1-7, **characterised in that** along the extent of the rim (12b) of the slot 12a) half to three quarters of the rim (12b) is supplemented with the protrusions (12c).

9. Fastening according to one of claims 1-8, **characterised in that** the fastening component (11 and 12) with the slot (12a) consists of a high-strength material.

10. Vehicle seat (1), in particular a motorised vehicle seat, with a sitting component (3) and a back (4), whose inclination can be set by at least one fixture (10) according to one of claims 1-9.

## Revendications

1. Armature pour siège de véhicule (1), en particulier pour siège de véhicule automobile, comportant une première pièce d'armature (11) sur laquelle est formée une roue crantée (17), une seconde pièce d'armature (12) sur laquelle est formée une roue crantée (16) qui s'empeigne avec la roue crantée (17), les deux pièces d'armature (11, 12) étant en liaison de transmission entre elles, un excentrique périphérique s'appuyant en rotation et entraîné par un entraîneur (21) pour commander un mouvement relatif de laminage de la couronne crantée (17) sur la roue crantée (16) et un palier pour l'excentrique, lequel palier est enfoncé dans un support (12a) de la première (11) ou de la seconde pièce d'armature (12), **caractérisé en ce que** le bord (12b) du support (12a) est évasé partiellement le long de sa circonférence au moyen de saillies axiales individuelles (12c).

2. Armature selon la revendication 1, **caractérisée en ce que** les saillies (12c) se présentent sous forme de pièces passant dans le matériau de l'armature (11, 12).

3. Armature selon la revendication 2, **caractérisée en ce qu'**est associé à chacune des saillies (12c) un creux pratiqué sur la face frontale opposée de la pièce d'armature (11, 12).

4. Armature selon une des revendications 1 à 3, **caractérisée en ce que** les saillies (12c) sont prévues le long de la circonférence du bord (12b) du support (12a) alternativement sur les deux faces frontales de l'armature (11, 12).

5. Armature selon une des revendications 1 à 4, **caractérisée en ce que** le palier se présente sous forme d'un palier à glissement ou d'un palier à roulement.

6. Armature selon une des revendications 1 à 4, **caractérisée en ce que** le palier se présente sous forme d'un palier d'appui pour un manchon de palier à glissement (28).

7. Armature selon une des revendications 1 à 6, **caractérisée en ce que** la dimension axiale des saillies (12c) représente jusqu'à trois quarts de l'épaisseur de matériau de la pièce d'armature (11, 12), en particulier entre un quart et la moitié.

8. Armature selon une des revendications 1 à 7, **caractérisée en ce que**, le long de la circonférence du bord (12b) du support (12a), entre la moitié et les trois quarts du bord (12b) sont pourvus des saillies (12c).

9. Armature selon une des revendications 1 à 8, **caractérisée en ce que** la pièce d'armature (11, 12) comportant le support (12a) est composée d'un matériau très solide.

10. Siège de véhicule (1), en particulier siège de véhicule automobile, comportant une pièce d'assise (3) et un dossier (4) dont l'inclinaison est réglable au moyen d'au moins une armature (10) selon une des revendications 1 à 9.
